(19)

Europäisches Patentamt
European Patent Office
Office européen des brevets

(11) **EP 1 843 283 A1**

(12) **EUROPEAN PATENT APPLICATION**

(43) Date of publication:
**10.10.2007 Bulletin 2007/41**

(51) Int Cl.:
*G06N 5/04* (2006.01)   *H04L 12/14* (2006.01)
*H04L 12/24* (2006.01)   *G06F 19/00* (2006.01)

(21) Application number: **06251888.1**

(22) Date of filing: **03.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **BRITISH TELECOMMUNICATIONS public limited company**
**London EC1A 7AJ (GB)**

(72) Inventor: **The designation of the inventor has not yet been filed**

(74) Representative: **Lidbetter, Timothy Guy Edwin et al**
**BT Group Legal**
**Intellectual Property Department**
**PP C5A**
**BT Centre**
**81 Newgate Street**
**London EC1A 7AJ (GB)**

(54) **Autonomous systems for routing data via a communications network**

(57)   A communications system is provided where a number of interconnected communications networks 3-1-3-4 are each associated with a control computer 5-1-5-4 arranged to set tariff data 15 for the utilisation of the associated communications network. Each of the control computers 5-1-5-4 includes a routing agent 10 which is arranged to set the tariff data 15 using a Q table based learning strategy where the frequency with which different levels of tariff are adopted when an associated communications network is in a particular state are set based on a calculated immediate reward for a particular tariff level and state and a factor corresponding to a logistic fictitious play payoff. Setting the tariff data in this way enables the routing agent to undertake Q table based learning without any information as to the rewards other agents achieved through their actions.

Fig.1.

**Description**

The present application relates to autonomous systems. More specifically the embodiments of the present invention concern autonomous systems for controlling the routing of data via communications networks.

The internet is an interconnected network of communication networks where each of the communication networks are autonomously administrated by different organisations such as universities, businesses and internet service providers. The number of different autonomous organisations involved in providing the internet has grown rapidly from around 900 in 1995 to more than 10,000 in 2002.

Routing within a single autonomous computer network forming part of the internet is governed by intra-domain protocols such as OSPF, RIP and IS-IS. In contrast routing between different computer networks forming part of the internet where the different computer networks are controlled by different organisations is governed by the Border Gateway Protocol (BGP). This Border Gateway Protocol enables individual organisations to exchange routing information and enforce different routing policies, where the routing policies govern access and transit routing preferences, identify best routes and decide whether information is shared with other organisations providing communication networks.

Problems arise when the controllers of individual networks set routing policies which lead to unstable routing advertisements which inconsistently notify reachability to certain prefixes. This may be caused by routes going up or down, failures, congestion, routing policies changing or BGP router misconfiguration. The complexity of BGP policy-based routing has also resulted in organisations controlling specific networks having little insight how their decisions affect other parties and themselves.

Further challenges to the internet infrastructure are posed by the emergence of user-directed routing. Most of today's user-directed routings are overlay networks and P2P networks. Some of these have been shown to improve reliability and performance. However, it is believed that if the internet remains unchanged the growth of user-directed routing will lead to increased cost and poorer performance and so aggravate current difficulties.

One way of addressing the current problems would be to provide additional support for source-based routing so that users could choose preferred routes according to advertised costs and performance metrics for different networks controlled by different organisations. Although such routing decisions could be performed by end users, typically the source routing decisions would be delegated to Internet service providers. If such an approach were to be practical, a means would therefore need to be provided to enable end users to delegate to internet service providers or overlay networks how data is to be routed via the internet.

However, such a solution would render internet routing much more dynamic and if variation of individual networks routing policies became too frequent this could worsen the current instability and make traffic loads highly unpredictable. A means for enabling the dynamic variation of routing policies and the advertisement of associated costs is therefore required which enables individual organisations to set the costs in such as way which reduces this instability.

In C. Papadimitriou, "Algorithms, Games, and the Internet" STOC'01: Proceedings of the 33rd Annual ACM Symposium on the Theory of Computing. New York, New York, USA: ACM Press, 2001, pp 749-753, a game theoretic model for the internet was proposed where autonomous systems for the different communication networks in the internet acted in accordance with a framework of cooperative game theory.

In such a system, the manner in which different autonomous agents decide upon their strategies may be undertaken in a number of different ways. One traditional learning algorithm is the minimax-Q algorithm disclosed in M. Littman, "Markov Games as a Framework for Multi-Agent Reinforcement Learning" in 11th International Conference on Machine Learning, 1994, pp 157-163. However, the minimax-Q and a similar algorithm Nash-Q disclosed in J. Hu and M. Wellman, "Multi-Agent Reinforcement Learning: Theoretical Framework and Algorithm" in Proceedings of 15th International Conference on Machine Learning, 1998, pp 242-250 are reliant upon assuming that players are able to observe the rewards derived by other players from taking certain actions.

An alternative system in which autonomous learning agents are able to determine strategies based on an expected reward for future actions but which is not dependent upon autonomous agents knowing the rewards derived by other players is therefore desirable.

In accordance with one aspect of the present invention there is provided a routing agent for setting tariff data for communications via a communications network comprising: a monitoring module operable to monitor tariff data set by other routing agents and a current state of a communications network associated with the routing agent; a selection module operable to set tariff data for a communications network on the basis of strategy data; and a learning module operable to update strategy data utilised by the selection module to set tariff data for the communications network using Q-value data stored in a Q-value table wherein the data within the Q-value table are updated using a calculated immediate reward and a factor corresponding to a calculated logistic fictitious play payoff for stored strategy data.

Further aspects and embodiments of the present will become apparent with reference to the accompanying drawings in which:

Figure 1 is a schematic block diagram of a communications network including routing agents for setting tariff data in accordance with an embodiment of the present invention;

Figure 2 is a schematic block diagram of the functional modules and stored data of a routing agent of Figure 1;

Figure 3 is a schematic block diagram of a strategy table of a routing agent of Figure 1;

Figure 4 is a schematic block diagram of a belief table of a routing agent of Figure 1;

Figure 5 is a schematic block diagram of a Q-value table of a routing agent of Figure 1; and

Figure 6 is a flow diagram of the processing undertaken by a routing agent of Figure 1 to set tariff data for an associated communications network.

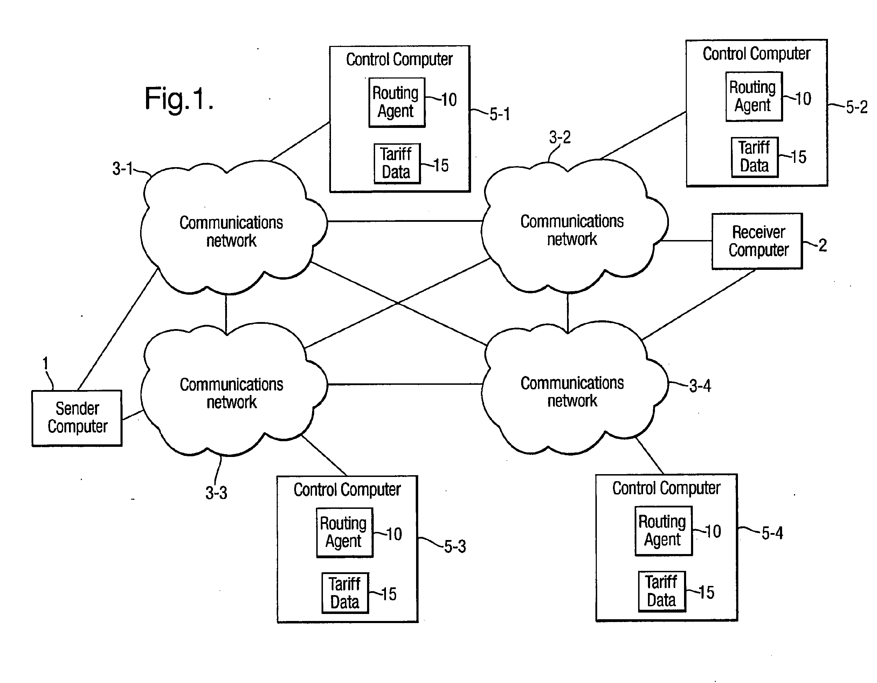

Figure 1 is a schematic block diagram of a computer network for sending messages between a sender computer 1 and a receiver computer 2. As is shown in Figure 1 a sender computer 1 is connected to a receiver computer 2 via a series of interconnected communications networks 3-1 ... 3-4. In the simplified example of Figure 1 four individual communications networks 3-1 ... 3-4 are shown. In practice many more inter connected communications networks 3-1;...; 3-4 would be provided.

As is shown in Figure 1 each of the communications networks 3-1 ... 3-4 is itself connected to a control computer 5-1; ...; 5-4 where each of the control computers 5-1; ...; 5-4 has stored therein a routing agent 10 for setting tariff data 15 relating to its associated communications network 3-1; ...; 3-4.

When the sender computer 1 wishes to dispatch a message to the receiver computer 2, a route for the message via the communications networks 3-1-3-4 must be determined. In this embodiment the selection of a route is made by the sender computer 1 on the basis of the tariff data 15 advertised by the control computers 5-1-5-3. The sum of the tariff data for each possible route between the sender computer 1 and receiver computer 2 is determined and the route associated with the lowest cost is then selected. The message is then dispatched to one of the communications networks 3-1 ;3-3 connected to the sender computer 1. Routers (not shown) with the selected communication network then forward the message on the basis of the selected route to one of the communications network 3-2;3-4 connected to the receiver computer 2. The communications network 3-2;3-4 connected to the receiver computer 2 receiving the message then forwards the message to the receiver computer 2 itself.

By varying the tariff data 15 for a particular network the control computer 5-1; ... 5-4 associated with a particular communications network 3-1; ... 3-4 can control the flow of data through the associated communications network 3-1; ...; 3-4. Thus for example at periods of peak demand, tariff data 15 can be increased to dissuade users forwarding communications via that network. Conversely if a communications network is being under-utilised tariff data 15 can be reduced to encourage other users to forward their messages via the associated communications network.

So as to provide a system which enables efficient use of network resources, the routing agents 10 of the control computer 5-1; ... 5-4 associated with a communications network 3-1; ...; 3-4 in this embodiment are such to set the tariff data 15 solely on the basis of: a monitored state of an associated communications network; the tariff data 15 received from the other control computers 5-1; ...; 5-4 and a determination of the expected payoff resulting from selecting particular strategies for setting tariff data 15. By setting tariffs in this manner, efficient use of the system can be achieved without the individual control computers 5-1; ...; 5-4 having to make additional information available to other parts of the system.

**Structure of the Routing Agents for Setting Tariff Data**

Before describing in detail the functioning of the routing agents 10 to achieve efficient setting of tariff data 15, the structure of an exemplary routing agent 10 will first be described.

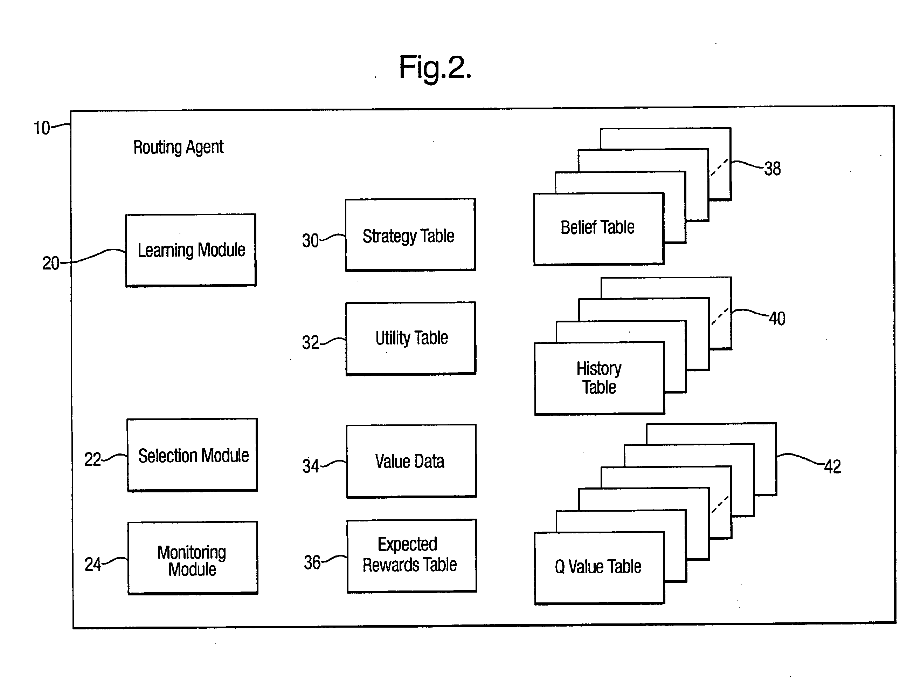

Figure 2 is a schematic block diagram of the functional modules of a routing agent 10 in accordance with an embodiment of the present invention. The functional modules shown in Figure 2 are presented for the purpose of understanding and in other embodiments different functions may be performed by different or combinations of different functional modules.

In this embodiment each routing agent 10 stored within the memory of a control computer 5-1; ...; 5-4 comprises: a learning module 20 for determining a strategy for setting tariff data 15 based on observed states of an associated communications network 3-1; ...; 3-4 and the tariff data 15 set by other control computers 5-1; 5-4; a selection module for setting tariff data 15 based on the strategy determined by the learning module 20; and a monitoring module 24 for monitoring the state (e.g. network utilisation) of the communications network 3-1; ...; 3-4 associated with the control computer 5-1; ... 5-4 within whose memory the routing agent 10 is stored.

In addition to the learning module 20, the selection module 22 and the monitoring module 24, a series of data tables 30-42 is also provided as part of the routing agent 10 which enables the learning module 20 if the routing agent 10 to determine an appropriate strategy for setting tariff data 15.

In this embodiment these data tables comprise: a strategy table 30 for storing data indicative of calculated statistic probabilities for selecting different tariffs when different network states are observed; and a utility table 32; a value data table 34; an expected rewards table 36; a belief table 38; a history table 40; and a Q value table 42 all utilised to update the strategy table 30 on the basis of observed tariff data 15 generated by other routing agents.

The structure and content of each of these tables will now be described in greater detail.

**Strategy Table**

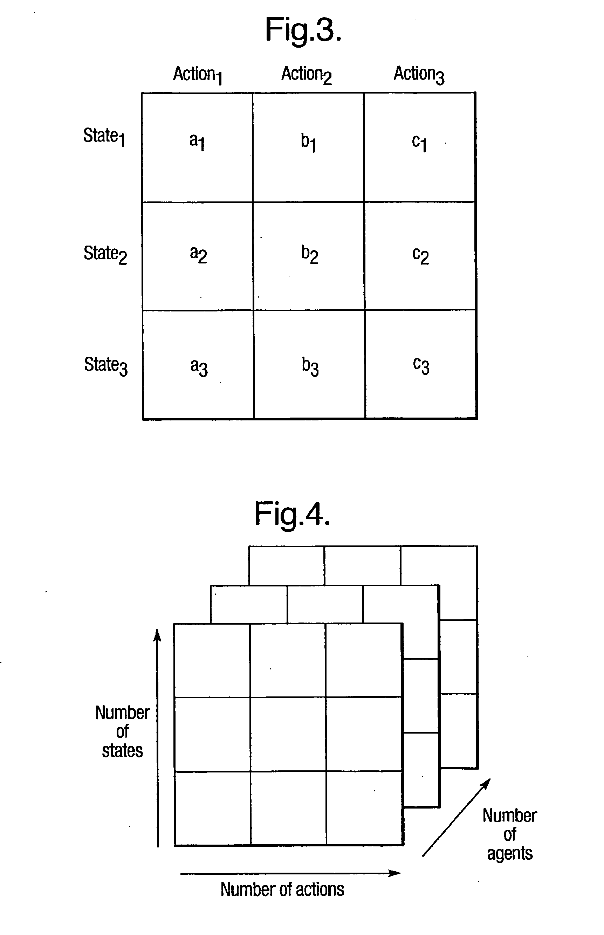

Figure 3 is a schematic illustration of an example of a strategy table 30 stored as part of a routing agent 10. The strategy table 30 comprises a 2 dimensional n x m table where n is the number of states that the monitoring module 24 can determine that an associated communications network 3-1; 3-4 may be in and where m is the number of different values that the routing agent 10 can set as tariff data 15 for the associated communications network.

In the example shown in Figure 3 the number of states a communications network can adopt is assumed to be three and the number of possible tariffs is also assumed to be three.

Stored within the strategy table for each state and for each action is an item of probability data being a calculated strategic probability with which a routing agent 10 will adopt a particular tariff 15 when the state of its associated network is in the state identified.

Thus in the exemplary illustration of Figure 3 where three actions are shown in the case of the network being in state 1, the routing agent will set a tariff at a first level (action 1) with a probability $a_1$, a second level (action 2) with a probability $b_1$ and a third level (action 3) with a probability $c_1$, where $a_1 + b_1 + c_1 = 1$. Similarly when the detected state is state 2 the probabilities with which actions 1, 2 and 3 would be $a_2$, $b_2$ and $c_2$ respectively, where $a_2 + b_2 + c_2 = 1$ and so on.

**Utility Table**

In this embodiment similarly to the strategy table 30, the utility table 32 is also a 2 dimensional n x m table where n is the number of states that the monitoring module 24 can determine an associated communications network 3-1; 3-4 to be in and where m is the number of different values that the routing agent can set as tariff data for the associated communications network. In this embodiment as will be described in detail later, the utility table 32 is an intermediate table which enables the value data 34 for a current state to be calculated.

**Value Data**

In this embodiment the value data 34 is calculated for each observance of the tariffs 15 by the routing agent 10 and again as with the utility table 32 and strategy table 30 the value data table 34 in this embodiment is a 2 dimensional n x m matrix where n is the number of states that the monitoring modules 24 can determine and associated communications network to be in and where m is the number of different values that the routing agent 10 can set as tariff data 15 for an associated communications network.

**Expected Rewards Table**

As with the strategy, utility and value data tables 30-34, the expected rewards table is a further 2 dimensional n x m data table where n is the number of states that the monitoring module 24 can determine an associated communications network 3-1; ...; 3-4 to be in and m is the number of different levels of tariff 15 that the routing agent 10 can set as tariff data. In this embodiment the expected rewards table 36 comprises data representative of the expected Q-values of different strategies as will be explained later.

**Belief Table**

Figure 4 is a schematic illustration of an example of a belief table 38 in accordance with this embodiment of the present invention.

In contrast to the two dimensional n x m strategy table 30, utility table 32, value data 34 and expected rewards table 36, the belief table 38 comprises a three dimensional n x m x I matrix where n is the number of states of the monitoring module 24 can determine that an associated communications network 3-1; ...; 3-4 may be in, where m is the number of different values that a routing agent 10 can set as tariff data 15 and where I is the number of routing networks 3-1-3-4 whose tariff data is advertised by the communications networks.

As will be explained, for each of the other routing agents 10, and for each combination of an observed state and an observed action undertaken by a particular routing agent 10, the routing agent 10 stores probability data identifying the frequency with which other agents 10 undertakes particular actions. Thus in this way the belief state table 38 stores data which the routing agent 10 is able to utilise to calculate of an appropriate strategy table 30.

### History Table

The history table 40 in this embodiment is the further three dimensional data matrix of the same size as the belief table 38. In this embodiment the history table 40 stores data identifying the number of times different routing agents 10 set tariff data 15 at particular levels when the observed state of an associated communication network 3-1; ...; 3-4 as observed by the monitoring module 24 is a particular value.

### Q Value Table

The final data table stored as part of the routing agent 10 is a Q value table 42.

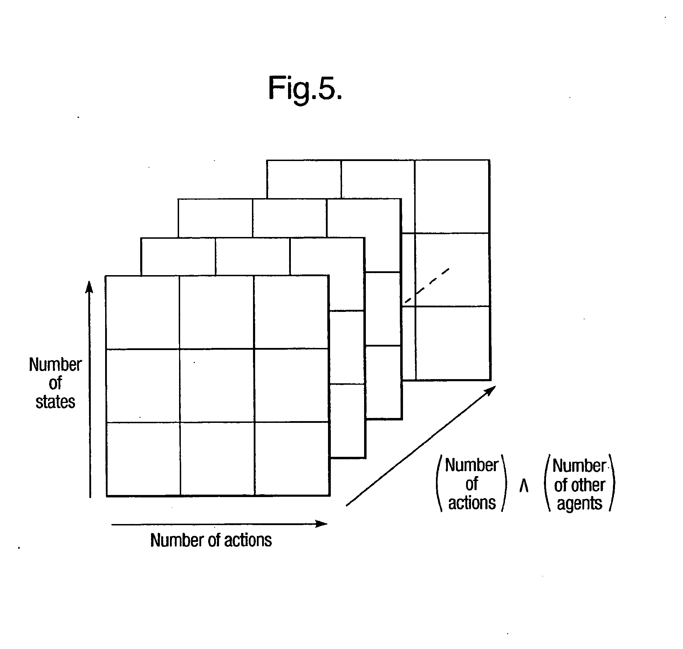

Figure 5 is a schematic illustration of data stored within the Q value table 42. In this embodiment the Q value table 42 stores a data table similar to the strategy table 30 or utility table 32 for each of the possible combinations of actions which may be undertaken by all of the other agents.

As is shown in Figure 5 the size of the Q value table 42 is an n x m x r matrix where n is the number of states that the monitoring module 24 may observe in associated communication network 3-1; ...; 3-4 to be in; m is the number of possible levels of tariff data 15 that the selection module 22 can set and r is the number of possible actions which the routing agents 10 of the other networks may undertake raised to the power of the number of other communications network 3-4 in the system. In this way, the Q value table 42 stores an n x m matrix of data for each possible combination of actions undertaken by the other routing agents.

Thus for example where the actions of three routing agents 10 can be observed and where each routing agent 10 can set one of three states and set three levels of tariff the Q table 42 would have dimensions of $3 \times 3 \times 3^3 = 3 \times 3 \times 27$. In such a 3 x 3 x 27 matrix, each of the 27 3 x 3 matrices of the Q value table would be associated with a different combination of actions undertaken by the observed other routing agents 10 of the system. Thus for example a first 3 x 3 matrix would be associated with all 3 other routing agents 10 setting tariff data 15 at a first level. Successive 3 x 3 matrices would be associated with other combinations of observed tariff levels until the final 3 x 3 matrix would be associated with each of the other observed agents setting tariff data at the third level.

### The Processing Undertaken by Routing Agent

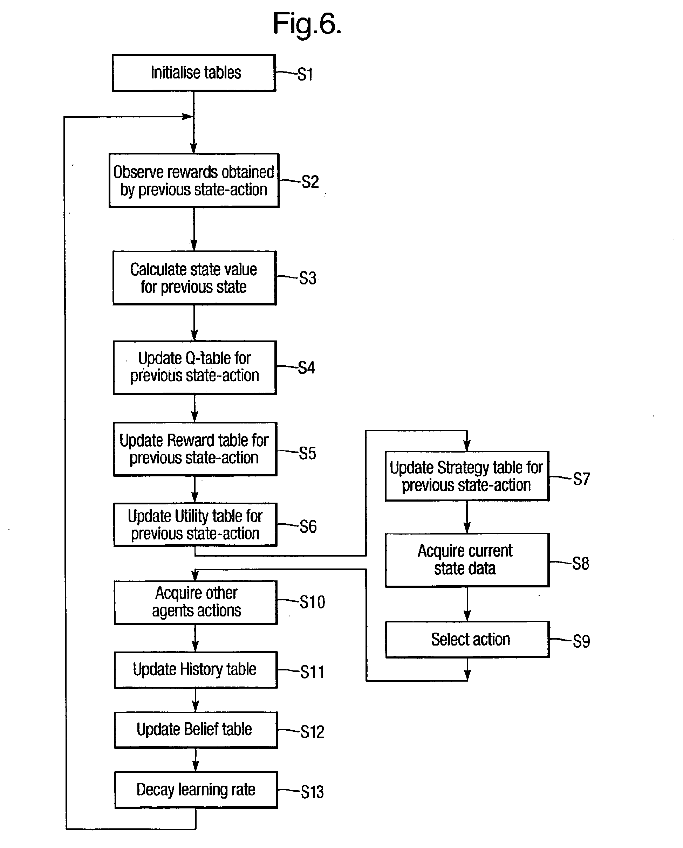

The processing undertaken by a routing agent 10 to set tariff data 15 will now be described in detail with reference to Figure 6 which is a flow diagram of the processing performed by the routing agent 10.

When a routing agent 10 is initially invoked, the first action undertaken by the routing agent 10 is the initialisation of the strategy 30, utility 32, expected rewards 36, belief 38, history 40, and Q-value 42 tables stored within the memory of the control computer 5-1; ...; 5-4.

In this embodiment the initialisation (S1) involves setting an initial learning rate factor λ equal to a positive value between 0 and 1, which for example might in one embodiment involve setting the initial learning rate factor equal to 0.5. The immediately previous actions undertaken by the routing agents 10 are then set to some arbitrary set of values, say for example assuming all agents were undertaking action 1 and the previous state is also set to some arbitrary value say for example state 1.

Next the initial content of the strategy table 30 is set with all the entries in the strategy table being made equal where the sum of the entries associates with the same state being equal to 1.

Thus in the case of the system as shown in Figure 3 where the routing module 10 is able to select one of three levels of tariff data, all entries in the strategy table 30 would be made equal to a third so that the selection module 22 would initially set tariff data 15 at the three different levels with equal frequency.

All the entries in the Q value table 42 and the utility table 32 are then set to one.

After that the content of the history table 40 is initialised by setting all entries in the history table 40 equal to an arbitrary value say for example 50.

The belief table 38 is then initialised by causing all the entries in the belief table 38 to be set to an equal value. However, in contrast to the history table 40 the entries in the belief table are set at a level so that the sum of entries associated with the same agent for the same state equals one. In this embodiment, this is achieved by copying entries from the history table 40 and normalising the entries by dividing each entry by the sum of entries from the history table 40 associated with the same state and the same agent.

Finally the entries in the expected rewards table 36 are initialised using the following equation:

$$\mathrm{Re}\,ward\,(s,a)=\sum_{l} Q(s,a,l)\left[\prod_{i} Belief\,(s,a,i)\right]$$

where Q(s,a,l) indicate entries in the Q table 42 and Belief (s,a,i) indicates entries in the belief table 38, s indicates a state, a indicates an action which can be undertaken by the current routing agent 10 and I and i range over the third dimension of the Q and Belief tables respectively so that each entry in the reward table is the sum of Q value table entries associated with the same agents, actions and states scaled by the assumed frequencies product with which those agents adopt those actions when the monitored communication systems 3-1; ...; 3-4 is in the identified state as identified by data in the belief table 38.

After the data within the strategy table 30, utility table 32, expected rewards table 36, belief table 38, history table 40 and Q value table 42 have all been initialised, the learning module 24 then determines (s2) the immediate reward obtained which resulted from the previously taken action having been undertaken which resulted in the previously observed state of the observed system being in a particular state.

The learning module then (S3) calculates value data 34 for the previously observed state of the observed system and the immediately previous action undertaken by the routing agent 10. So that this value data 34 reflects expected rewards for future actions undertaken by the routing agent 10, in accordance with the present invention, the calculation of the value data 34 is set utilising the following formula which causes the value data to correspond to an expected logistic fictitious payoff for the current state:

$$Value\,Data\,(s,a)=\sum_{a\in A} utility\,(s,a)strategy\,(s,a)-\alpha\left[\sum_{a\in A} strategy\,(s,a)ln\,(strategy\,(s.a))\right]$$

where utility (s,a) is the utility associated with different states and actions as identified by entries in the utility table 32 and strategy (s,a) is the probability of the routing agent 10 setting particular tariffs when the monitored communications network is 3-1; ...; 3-4 is in a particular state as identified by entries in the strategy table 30.

As can been seen from the equation above, since the calculated value data is based solely upon the data within the utility table 32 and data within the strategy table 30, the expected logistic fictitious play payoff may be calculated in the absence of any information relating to the internal rewards achieved by the routing agents 10 of the other control computers. Hence setting value data based in this way provides a means by which Q type learning can be achieved solely on the observed actions of other routing agents 10 and the monitored state of a communications network 3-1; ...; 3-4.

After value data has been stored in the value data table 34, the learning module 20 then (S4) proceeds to utilise the calculated value data 34 and immediate reward to update entries in the Q value table 42.

This is achieved by updating the Q value entries associated with the detected combination of tariff data 15 previously set by the other routing agents using the following equation:

$$Q\,(s,a,i)=Q\,(s,a,i)+\lambda\,[immediate \quad reward \quad (s,a)+\tau\,value\,(s,a)]$$

with immediate reward (s,a) being a calculated immediate reward for taking the previously selected action a and when the previously detected state of the communications network is in state s, A being the current learning rate variable, value (s,a) being the data in the value data table 34 and T being a preset discount factor.

After the Q table 42 has been updated, the learning module 20 then proceeds to update (S5) the expected rewards table 36 using the following equation:

$$\mathrm{Re}\,ward\,(s,a)=\sum_{l} Q(s,a,l)\left[\prod_{i} Belief\,(s,a,i)\right]$$

with Q(s,a,l) and Belief (s,a,i) being entries in the Q and Belief tables and where I corresponds to the immediately previously observed actions undertaken by the other agents.

The utility table 32 is then (S6) updated using the updated reward table 36, the strategy table 30 and the history table 40.

In this embodiment this is achieved using the following equation:

$$utility(s,a)=utility(s,a)+\frac{Reward(s,a)-utility(s,a)}{Strategy(s,a)history(s,a,r)}$$

with Reward (s,a), utility (s,a), Strategy (s,a) and history (s,a,r) being entries in the reward 36, utility 32, strategy 30 and history 40 tables respectively, and r identifying the current agent.

The content of the strategy table 30 is then (s7) updated using the following equation:

$$Strategy(s,a)=\frac{\exp(\frac{1}{\alpha}utility(s,a))}{\sum_b \exp(\frac{1}{\alpha}utility(s,b))}$$

where strategy (s,a)and utility (s,a) are entries in the strategy and utility table for the previously observed state and action, where b ranges across all actions that might be undertaken by the routing agent 10 and where $\alpha$ is a fixed fictitious play factor for the system.

The monitoring module 24 then (s8) acquires data directly from the communications network 3-1; ...; 3-4 associated with the control computer 5-1; ...; 5-4 to determine a current state for the network 3-1; ...; 3-4.

In this embodiment where the routing agents 10 are controlling tariff data 15 for communication networks, the state data acquired by the monitoring module 24 will be data indicative of the extent of utilisation of routes within the associated communications network 3-1; ...; 3-4. Typical state data could be an average utilisation of the links within the communication network 3-1; ...; 3-4 such as can be calculated using the following equation:

$$Average\ network\ utilization=\frac{\sum_{links}\frac{traffic}{linkspeed}}{number\ of\ links}$$

where traffic is measure volume of data carried by a link in the communications network 3-1; ...; 3-4 being monitored by a particular routing agent 10; link speed is the speed at which data is transmitted via an identified link; and the number of links is the number of links in the monitored communications network 3-1; ...; 3-4.

After an appropriate utilization measure has been calculated, the monitoring module 24 then coverts the calculated measure into an indication of a current state for the communications network 3.

Thus for example in a simple system the communications network 3-1; ...; 3-4 might be considered to be in one of three states indicating high, medium or low utilization of the links within a particular network 3-1; ...; 3-4. In other more complicated embodiments, the granularity of state measured by the monitoring module 24 may be significantly greater and could depend upon many more variables other than an average utilization of network resources.

Having determined the current state of the communications system 3-1; ...; 3-4 the monitoring module 24 is monitoring, the selection module 22 then (S9) proceeds to select a tariff 15 to be set for utilising the communications network associated with the routing agent 10.

In this embodiment, this is achieved by the selection module 22 generating a random number between zero and one. The generated value is then compared with the data entry in the strategy table 30 associated with the current determined state of the communications network 3-1; ...; 3-4 and the first action which might be undertaken by the selection module 27. If this value is greater than the data entry associated with a first action then this value is subtracted from the calculated value and the result is compared with the following data entry in the table associated with the current state of the communications network and the next action. When it is determined that the calculated value is less than the selected data entry from the table, the selection module 22 then performs the action associated with that data entry.

Thus for example assuming that the current determined state was state 1 in the case of the strategy table of Figure 3, initially the generated number would be compared with the entry corresponding to $a_1$ in Figure 3. If the value was greater than $a_1$, difference between the generated number would compare with $b_1$ from the strategy table 30 and so on.

In this way by generating a random number and comparing it with the values in the strategy table 30, the selection module 22 is caused select one of the actions as an appropriate action to undertake. The selection module 22 then proceeds to set the tariff data 15 on the basis of the selected action. By having the selection module 22 set tariff data 15 in this way, the values appearing in the strategy table 30 are such identify the frequency with which the selection module 22 sets the different tariff when particular states are observed by the monitoring module 24, thereby determining the strategy by which the routing module 10 sets its tariffs.

After the selection module 22 has set a current tariff data 15 based on the selected action from the strategy table 30, the monitoring module 24 then (S10) acquires the tariff data 15 set by the other control computers and the learning module 20 then (s11) proceeds to update the history table 40.

That is to say the content of the history table 40 is updated using the following equation:

History (s,a,i) = History (s,a,i) + 1, if current state = s and level of tariff set by routing agent i corresponds to action a,

and

History (s,a,i) = History (s,a,i) otherwise.

Next the updated history table 40 is (s12) utilised to update the Belief table 38 using the following equation:

$$Belief\,(s,a,i) = \frac{History(s,a,i)}{k(s)}$$

where k(s) is the sum of the data entries in the history table associated with the same state and the same agent.

Thus in this way, whereas the data within the history table 40 identifies the numbers of times different routing agents undertake particular actions (setting particular tariffs) when a communications network is determined to be in a particular state, the belief table 38 stores corresponding data in the form of data identifying the probabilities with which an agent will adopt a particular tariff when the communications network 3-1; ...; 3-4 is in a particular state.

Finally the learning rate $\lambda$ is reduced (S13) and the routing agent 10 then proceeds to observe the reward obtained by the routing agent's choice of action and determine an updated state value (s2-s3) before updating the Q, reward and utility and strategy tables in the manner just described (S4-S7) prior to acquiring new state data and selecting a new action (s8-s9) and updating the remaining tables after acquiring updated tariff data 15 from the other routing agents 10 (s10-13) for use in the next successive time period.

By calculating the state value in the manner described a Q table 42 can be maintained which enables the expected future impact of the current strategies to be utilised when determining new strategies for the routing agents but which is not dependent upon knowing the actual reward achieved by other routing agents 10 in the system.

The performance of the above logistic fictitious play Q-learning algorithm compared with another conventional learning algorithm which is similarly not dependent upon knowing the actual reward achieved by other routing agents 10 has been evaluated in simulations. In the simulations, a system was simulated for 1200 learning iterations during which four networks connected to form a topology identical to Fig. 1 of the present embodiment were learning, both where all networks were learning according to a conventional learning algorithm and the case where all networks were learning according to a conventional learning algorithm except for one network that was learning according to the above described logistic fictitious play Q-learning algorithm.

It has been found that the above described logistic fictitious play Q-learning algorithm enabled a network to obtain better rewards in terms of average reward values over time compared with conventional learning algorithms.

Analogous results were obtained when analyzing scenarios in which any one of the routing agents 5-1;-;5-4 was selected to undertake learning according to the above logistic fictitious play Q-learning algorithm. Consistently, routing agents 10 were found to perform worse on average when opposing agents were is using a logistic fictitious play based Q-learning algorithm.

## Modifications and Alternative Embodiments

Although in the above embodiment a routing scheme has been described in which the action undertaken by a routing agent 10 is based on the calculation of a random number in a specific way, it will be appreciated that any suitable system for selecting actions where frequency is identified in the strategy table 30 could be utilised.

Similarly although in the above described embodiment the determination of a least cost routing path is described as being undertaken by a sender computer 1, it will be appreciated that the selection of a routing path based on tariff data 15 could be undertaken in other ways. Thus for example the calculation of a path could be delegated to an initial router within one of the communications networks 3-1-3-4. The manner in which a route is selected based on tariff data 15 could also differ from that described in detail in the embodiment. Thus for example other factors such as route length, and the ease of calculation of a route could be used in the algorithm to determine a selected path.

Although in the above described embodiment, a set of routing agents for selecting tariff data for communication networks has been described, it will be appreciated that the novel automated learning technique described in this application could be applied in other contexts. More specifically the calculation of a Q learning table based on an assumed logistic fictitious payoff could be utilised in any situation in which autonomous agents are required to dynamically adapt an action decision plan by learning their actions quality through trial and error. As previously noted, in the above description, the calculation of a strategy identifying frequencies with which different actions may be undertaken when a specific state of a system is identified can be achieved solely through monitoring a state of the system and observing the actions undertaken by other agents.

Thus for example the above described learning algorithm could be utilised where the actions undertaken by agents correspond to actions other than setting tariffs for a communication network.

One application could be the use of the described system for any form of automated trading in which players are able to observe other's actions but not other's rewards. Suitable applications could include automated trading agents for any type of trading e.g. financial instruments, stocks and shares or physical goods wherever an automated system is able to observe other's actions but not their rewards.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier can be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1.  A machine learning agent for determining a strategy for frequencies with which a set of specified actions should be undertaken based upon the observance of the actions undertaken by other agents, the machine learning agent comprising:

    a monitoring module operable to monitor the frequency which other agents undertake specified actions when the current state of an associated system is in a specified state;
    a data store operable to store strategy data defining for an agent a set of frequencies with which the agent should undertake specified actions dependent upon a monitored state of an associated system;
    a Q-value table operable to store Q-value data in association with actions which could be undertaken by the agent and states observed by said monitoring module for all combinations of actions which can be undertaken by other agents for which said monitoring module is configured to observe; and

an update module operable to update strategy data stored in said data store using said Q-value data stored in said Q-value table wherein the data within the Q-value table are updated using a calculated immediate reward for an observed state of an associated system as observed by said monitoring module together with a factor corresponding to a calculated logistic fictitious play payoff based on the strategy data stored in said data store.

2. A machine learning agent in accordance with claim 1 wherein the update module is configured to calculate a fictitious play payoff utilising the following equation:

$$Value\,Data\,(s,a) = \sum_{a \in A} utility\,(s,a)\,strategy\,(s,a) - \alpha\left[\sum_{a \in A} strategy\,(s,a)\,ln\,(strategy\,(s.a))\right]$$

wherein utility(s,a) is a calculated utility value obtained by an agent taking action a when the observed system is in state s and strategy (s,a) is the strategy data stored in the data store associated with state s and action a.

3. A machine learning agent in accordance with claim 2, further comprising:

a utility value table operable to store utility data associated with actions that can be undertaken by an agent and states of an observed system; and
a reward table operable to store an expected reward data associated with actions that can be undertaken by an agent and states of an observed system,
wherein said monitoring module is operable to detect the actions undertaken by other agents and a current state of an associated system and said update module is operable to update entries in said utility table when said monitoring module detects the actions undertaken by other agents and a current state of an associated system utilising the following equation:

$$utility\,(s,a) = utility\,(s,a) + \frac{reward\,(s,a) - utility\,(s,a)}{strategy\,(s,a)\,history\,(s,a,r)}$$

wherein utility (s,a), reward (s,a) and strategy (s,a) are is a utility value in said utility table, reward data in said reward table and probability data in said data store associated with state s and action a respectively and history (s,a,r) is the number of times an agent r has been observed to take action a when the observed state of the associated system is in state s.

4. A machine learning agent in accordance with claim 3, further comprising:

a belief table operable to store for each agent which said monitoring module is configured to observe, belief data indicative of an observed probability of a particular agent undertaking a particular action when the observed state of the system is in a particular state and said learning agent is suggested to undertake a particular action; and
wherein when said monitoring module detects the actions undertaken by other agents and a current state of an associated system said update module is operable to update entries in the rewards table utilising the following equation:

$$Re\,ward\,(s,a) = \sum_{l} Q\,(s,a,l)\left[\prod_{i} Belief\,(s,a,i)\right]$$

wherein Q(s,a,l) is the entry in the Q table associated with the current observed state of the associated system, the current suggested action to be undertaken by the agent and the current observed actions of other agents and Belief (s,a,i) corresponds to the entry in the Belief table indicative of the expected probability of agent i undertaking the current detected action for agent i when the associated system is in the current detected state and the learning agent undertakes action a.

5.  A machine learning agent in accordance with any preceding claim, further comprising:

    a selection module responsive to the detection of the state of an associated system by said monitoring module to cause said machine learning agent to undertake actions with a frequency corresponding to the strategy data stored in said data store.

6.  A machine learning agent in accordance with claim 5 wherein said monitoring module is operable to observe the extent of utilization of an associated communications network and wherein said selection module is responsive to the detection of the extent of utilization of an associated communications network by said monitoring module to cause said machine learning agent to set tariff data for utilizing said associated communications network at different levels with a frequency corresponding to the strategy data stored in said data store.

7.  A communications system comprising:

    a plurality of communications networks; and
    a plurality of a machine learning agents in accordance with claim 6 wherein each of said machine learning agents is operable to monitor the utilization of and set tariff data for a respective one of said communications networks.

8.  A communications system in accordance with claim 7, further comprising:

    at least one router operable to receive tariff data set by said machine learning agents and to select a route for routing data via said communications system on the basis of said obtained tariff data.

9.  A method of machine learning for determining a strategy for the frequencies with which a set of specified actions should be undertaken based upon the observance of the actions undertaken by other agents, the machine learning method comprising:

    monitoring the frequency which other agents undertake specified actions when the current state of an associated system is in a specified state;
    storing strategy data defining a set of frequencies with which a machine learning agent should undertake specified actions dependent upon a monitored state of an associated system;
    storing a Q-value table associating Q-value data with actions which could be undertaken by an agent and observed states of an associated system for all combinations of actions which can be undertaken by other agents whose states can be observed by the machine learning agent; and
    updating strategy data stored in said data store using said Q-value data stored in said Q-value table wherein the data within the Q-value table are updated using a calculated immediate reward for an observed state of an associated system together with a factor corresponding to a calculated logistic fictitious play payoff based on the strategy data stored in said data store.

10. A method of machine learning in accordance with claim 9 wherein the calculation of a fictitious play payoff comprises a state value calculated utilising the following equation:

$$Value\ Data\,(s,a) = \sum_{a \in A} utility\,(s,a)\,strategy\,(s,a) - \alpha \left[ \sum_{a \in A} strategy\,(s,a)\,ln\,(strategy\,(s.a)) \right]$$

wherein utility(s,a) is a calculated utility value obtained by the agent taking action a when the observed system is in state s and strategy (s,a) is the strategy data stored in the data store associated with state s and action a.

11. A method of machine learning in accordance with claim 10, further comprising:

    storing a utility value table associating utility values with actions that can be undertaken by an agent and states of an observed system;

storing a reward table associating an expected reward with actions that can be undertaken by an agent and states of an observed system, and
wherein updating entries in said utility table utilising the following equation:

$$utility\left(s,a\right)=utility\left(s,a\right)+\frac{reward\left(s,a\right)-utility\left(s,a\right)}{strategy\left(s,a\right)history\left(s,a,r\right)}$$

wherein utility (s,a), reward (s,a) and strategy (s,a) are is a utility value in said utility table, an expected reward in said reward table and probability data in said data store associated with state s and action a respectively and history(s,a,r) is the number of times agent r has been observed to take action a when the observed state of the associated system is in state s.

12. A method of machine learning agent in accordance with claim 11, further comprising:

storing a belief table associating for each other agent which said machine learning agent is configured to observe, belief data indicative of an observed probability of a particular agent undertaking a particular action when the observed state of the system is in a particular state said learning agent is suggested to undertake a particular action; and
wherein updating entries in the rewards table comprises updating entries utilising the following equation:

$$\mathrm{Re}\,ward\left(s,a\right)=\sum_{l}\,Q\left(s,a,l\right)\left[\prod_{i}\,Belief\left(s,a,i\right)\right]$$

wherein Q(s,a,l) is the entry in the Q table associated with the current observed state of the associated system, the current suggested action to be undertaken by the agent and the current observed actions of other agents and Belief (s,a,i) corresponds to the entry in the Belief table indicative of the expected probability of agent i undertaking the current detected action for agent i when the associated system is in the current detected state and the learning agent undertakes action a.

13. A method of machine learning in accordance with any of claims 9 -12, further comprising:

responding to the detection of the state of an associated system by undertaking the action with a frequency corresponding to the strategy data stored in said data store.

14. A method of machine learning in accordance with claim 13 wherein said monitoring includes observing the extent of utilization of an associated communications network and wherein responding to the detection of the state of an associated system comprises setting tariff data for utilizing said associated communications network at different levels with a frequency corresponding to the strategy data stored in said data store.

15. A storage medium storing computer interpretable instructions to cause a programmable computer to become configured as a machine learning agent in accordance with any of claims 1-6.

16. A storage medium in accordance with claim 15 comprising a computer disk.

17. A disk in accordance with claim 16 comprising a magnetic, magneto-optic or optical disk.

18. A storage medium in accordance with claim 15 comprising an electrical signal within a communications network.

19. A machine learning agent for determining a strategy for the frequencies with which a set of specified actions should be undertaken based upon the observance of the actions undertaken by other agents utilising a Q table updated on the basis of a calculated logistic fictitious payoff for an action substantially as disclosed herein with reference to the accompanying drawings.

20. A machine learning method for determining a strategy for the frequencies with which a set of specified actions should be undertaken based upon the observance of the actions undertaken by other agents utilising a Q table updated on the basis of a calculated logistic fictitious payoff for an action substantially as disclosed herein with reference to the accompanying drawings.

Fig.1.

Fig.2.

# Fig.3.

|  | Action$_1$ | Action$_2$ | Action$_3$ |
|---|---|---|---|
| State$_1$ | a$_1$ | b$_1$ | c$_1$ |
| State$_2$ | a$_2$ | b$_2$ | c$_2$ |
| State$_3$ | a$_3$ | b$_3$ | c$_3$ |

# Fig.4.

Number of states

Number of actions

Number of agents

# Fig.5.

Number
of
states

Number of actions

$$\begin{pmatrix} \text{Number} \\ \text{of} \\ \text{actions} \end{pmatrix} \wedge \begin{pmatrix} \text{Number} \\ \text{of other} \\ \text{agents} \end{pmatrix}$$

# Fig.6.

```
        ┌─────────────────────┐
        │  Initialise tables  │──S1
        └─────────────────────┘
                  │
                  ▼
        ┌─────────────────────┐
        │ Observe rewards     │
        │ obtained by previous│──S2
        │ state-action        │
        └─────────────────────┘
                  │
                  ▼
        ┌─────────────────────┐
        │ Calculate state     │
        │ value for previous  │──S3
        │ state               │
        └─────────────────────┘
                  │
                  ▼
        ┌─────────────────────┐
        │  Update Q-table for │
        │ previous state-     │──S4
        │ action              │
        └─────────────────────┘
                  │
                  ▼
        ┌─────────────────────┐
        │ Update Reward table │
        │ for previous state- │──S5
        │ action              │
        └─────────────────────┘
                  │
                  ▼
        ┌─────────────────────┐        ┌──────────────────────┐
        │ Update Utility table│        │ Update Strategy table│
        │ for previous state- │──S6    │ for previous state-  │──S7
        │ action              │        │ action               │
        └─────────────────────┘        └──────────────────────┘
                  │                              │
                  ▼                              ▼
        ┌─────────────────────┐        ┌──────────────────────┐
        │ Acquire other       │──S10   │ Acquire current      │──S8
        │ agents actions      │        │ state data           │
        └─────────────────────┘        └──────────────────────┘
                  │                              │
                  ▼                              ▼
        ┌─────────────────────┐        ┌──────────────────────┐
        │ Update History table│──S11   │   Select action      │──S9
        └─────────────────────┘        └──────────────────────┘
                  │
                  ▼
        ┌─────────────────────┐
        │  Update Belief table│──S12
        └─────────────────────┘
                  │
                  ▼
        ┌─────────────────────┐
        │ Decay learning rate │──S13
        └─────────────────────┘
```

# EP 1 843 283 A1

| | **European Patent Office** | **EUROPEAN SEARCH REPORT** | **Application Number** <br> EP 06 25 1888 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHI ZHANG ET AL: "A game-theoretic learning model in multi-agent systems" MACHINE LEARNING AND CYBERNETICS, 2002. PROCEEDINGS. 2002 INTERNATIONAL CONFERENCE ON NOV. 4-5, 2002, PISCATAWAY, NJ, USA,IEEE, 4 November 2002 (2002-11-04), pages 1511-1516, XP010805052 ISBN: 0-7803-7508-4 * abstract * * paragraph [0002] * * paragraph [03.2] * * paragraph [0004] * * paragraph [05.2] * | 1-5, 9-13, 15-20 | INV. G06N5/04 H04L12/14 H04L12/24 G06F19/00 |
| Y | | 6-8,14 | |
| Y | RUDEK R ET AL: "Introduction to Multi-Agent Modified Q-Learning Routing for Computer Networks" TELECOMMUNICATIONS, 2005. ADVANCED INDUSTRIAL CONFERENCE ON TELECOMMUNICATIONS/SERVICE ASSURANCE WITH PARTIAL AND INTERMITTENT RESOURCES CONFERENCE/ E-LEARNING ON TELECOMMUNICATIONS WORKSHOP. AICT/SAPIR/ELETE 2005. PROCEEDINGS LISBON, PORTUGAL 17-22, 17 July 2005 (2005-07-17), pages 408-413, XP010841690 ISBN: 0-7695-2388-9 * abstract * * figure 2 * * paragraph [0002] * * paragraph [0004] * | 6-8,14 | |
| | | | TECHNICAL FIELDS SEARCHED (IPC) <br> H04L <br> G06N <br> G06F |
| A | US 2004/246900 A1 (ZHANG YING ET AL) 9 December 2004 (2004-12-09) * abstract * * paragraph [0041] * * paragraphs [0067] - [0069] * | 1-20 | |

-/--

The present search report has been drawn up for all claims

| Place of search | Date of completion of the search | Examiner |
|---|---|---|
| The Hague | 4 October 2006 | Bonnet, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 25 1888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 235 391 A (COMMISSARIAT A L'ENERGIE ATOMIQUE) 28 August 2002 (2002-08-28) <br> * abstract * <br> * paragraph [0018] * <br> * paragraphs [0024] - [0038] * <br> ----- | 1-20 | |

TECHNICAL FIELDS
SEARCHED     (IPC)

The present search report has been drawn up for all claims

| Place of search | Date of completion of the search | Examiner |
|---|---|---|
| The Hague | 4 October 2006 | Bonnet, Jérôme |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 06 25 1888

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2006

| Patent document cited in search report | Publication date | Patent family member(s) | Publication date |
|---|---|---|---|
| US 2004246900 A1 | 09-12-2004 | NONE | |
| EP 1235391 A | 28-08-2002 | FR 2818850 A1<br>US 2003145111 A1 | 28-06-2002<br>31-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithms, Games, and the Internet. **C. PAPADIM-ITRIOU.** STOC'01: Proceedings of the 33rd Annual ACM Symposium on the Theory of Computing. ACM Press, 2001, 749-753
- **M. LITTMAN.** Markov Games as a Framework for Multi-Agent Reinforcement Learning. *11th International Conference on Machine Learning,* 1994, 157-163
- **J. HU ; M. WELLMAN.** Multi-Agent Reinforcement Learning: Theoretical Framework and Algorithm. *Proceedings of 15th International Conference on Machine Learning,* 1998, 242-250